Europäisches Patentamt

(19) European Patent Office

Office européen des brevets

(11) Publication number: **0 185 838**
**A2**

(12) **EUROPEAN PATENT APPLICATION**

(21) Application number: 85108108.3

(22) Date of filing: 29.06.85

(51) Int. Cl.⁴: **H 01 H 67/22**

(30) Priority: 13.12.84 GB 8431497

(43) Date of publication of application:
02.07.86 Bulletin 86/27

(84) Designated Contracting States:
DE FR GB IT

(71) Applicant: Eaton S.A.M.
14 Boulevard Prince Hereditaire Albert
Monaco 98000(MC)

(72) Inventor: Doutriaux, Jean Luc
4 Rue de Chenonceaux
F-67000 Strasbourg(FR)

(72) Inventor: Corbier, Jean Paul
10, Avenue du Professeur Langevin
F-06240 Beausoleil(FR)

(72) Inventor: Arnaud, Gerard
10, Avenue du Professeur Langevin
F-06240 Beausoleil(FR)

(74) Representative: Douglas, John Andrew
Eaton House Staines Road
Hounslow Middlesex TW4 5DX(GB)

(54) Commutator arrangement.

(57) In order to reduce the number of relays, with their consequent weight and other costs, used to commutate switches, eg to initiate such program functions as "heat to 40°", "heat to 95°", tumble, fast spin etc, one travelling rocker actuator 22 energized by one relay, can select several switches 9 in turn. With memory switches, two separate actuating stations can be used for switch first state to second state, and vice-versa.

The travelling is digitally commanded, and digitally tracked to check on overshoots, seize-ups or arrivals at one end or the other.

Every time the traveller arrives at one end, it is "referenced", ie its digital count and starting position are accurately reset. The latter preferably follows abutting of surfaces relatively moving transversely to the direction of travel of the traveller, to reduce the leverage, and thus the locking-together effect under inertia, of the abutting engagements. The transverse abutment may be a free radial extension at one axial end of a helical spring which is anchored at its other end. The resilience reduces noise, and prolongs the slow down which is digitally sensed to rapidly stop the motor. After every switch-off, the programmer is "initialized" by opening all the (function) switches, and referencing and moving the traveller to a start station.

./...

Fig.2.

0185838

Commutator Arrangement

The present invention concerns the selective control of a plurality of switches, and is particularly applicable to select available functions in a domestic machine programmer. The control may be remote. The invention is particularly suitable, for clothes-washers, dish-washers, ovens and the like, or even public washing or dry-cleaning installations and laundries. Memory switches are frequently used to initiate the functions, and remain in any given switching state (eg OFF or RESET), until next actuated to another state (eg ON or SET).

Modern domestic machines frequently can execute alternative programs, ie to fulfil at predetermined instants a number of functions corresponding to the programmed objective. For instance, a washing machine program would start and stop the filling, emptying, or water softener pumps, and the cyclic pumping of spraying or rinsing water, also the distribution of liquid and powder products, the opening and closing of water valves, etc, timed and in a sequence according to preset routines.

Recently, mechanical timing elements for such sequences have given way to the less bulky and more reliable microprocessor. However, this development has tended not to reduce the number of relays with individual operating coils, often 10 or more, needed to switch the quite substantial motor starting, or heating currents involved.

The invention aims to enable use of plural command outputs, eg of a microprocessor, with minimum use of coils, by using an intermediate command member for a plurality of selectable switching steps in a commutation sequence. The memory switches will most conveniently be rocker-operated snap-switches of the two-state memory type (mechanical bistable). The memory switches can collectively serve all the functions of the machine.

- (1) Accordingly, the commutator of the invention proposes according to a first aspect, a travelling switch-actuator, being a pivoted rocker having an operating position and a rest or relaxed position to which it may be spring biased, incremental positioning means (eg a threaded longitudinal member preferably an endless or headless bolt, or a belt and pulleys extending along a longitudinal support on which the rocker can travel), and count setting and comparing means, the threaded or other longitudinal transport member extending along the group of switches and a cooperating carriage member, such as a nut travelling along a bolt or vice versa, carrying the switch actuator rocker. The travelling is monitored by registering and commanding revolutions or part revolutions, eg the count of the relative turns between the threaded members or turns of a pulley etc. The actual count can be compared with a set count, to indicate the position, or incremental position of the travelling switch-actuator. The position will be unique to actuation of a switch control, eg of either an on-plunger or an off-plunger of one particular switch in the bank or row of eg memory switches, unless that respective control or plunger is already actuated (when it will remain actuated). An important feature of preferred embodiments is that the single relay armature or plate also has an extended driver portion or edge extending along the vicinity of all the controls or plungers, in such manner that the relay can pivot the travelling switch-actuator, wherever the latter happens to be located.

In order to guide the rocker to successive positions activating the switch-on or switch-off of particular switches defined by the particular steps in a program, a microprocessor can provide the succession of counts at one or more outputs. The counts will correspond to numbers of relative turns by the nut on the threaded bolt. Each stage in the program, and each relevant count, will then lead to the rocker being stopped, so that a specific switch is confronted

0185838

at one of a specific number of plungers (eg two, in the case of an on-off switch). The microprocessor will command the travelling by generating successive counts, and the stopping, and the operation of the rocker.

By "plunger" we would include devices actuated by a mere light contact, or even proximity, for instance using capacitance or magnetic effects. Preferably the "plungers" are in two rows parallel to the actuator travel; one row has the "on" plungers of a row of on-off memory snap switches and the other row has the "off" plungers. The switches have memory in that they remain on until actuated off, and vice-versa.

The actuator thus travels along a threaded rotating shaft, by screw and nut action, and the rotations of the shaft may be digitized to eg tenths of a revolution eg by having ten equi-spaced marks on a non-travelling wheel rotating with the shaft, and counting passages of the marks. Preferably, the "basic" marks were apertures in a wheel, which intercepted a light beam, to set up a count of intensity fluctuations, various registrations of this count would correspond to the plunger positions.

A particular washing machine or other selected program could involve switching on three plungers, Nos. 5, 11 and 19 for example, then switching these off, later switching on four others, Nos. 1, 3, 7 and 13 for a second working stage. (Or they may be switched on one at a time). Large positioning errors, especially if cumulative, could cause erroneous switching.

Another problem that can arise is the inaccuracy of digitizing. There are many ways of digitizing a linear position, and one usually negligible source of error is the actual digitizing of intervals. These errors can be minimized nearly at will, but at the expense of complication etc, by finer digitizing, ie reducing the analog intervals. Further errors are caused by miscounting the fluctuations, equipment aberrations, dirt on lens systems, electrical fluctuations etc. The largest errors are likely to be caused by inertia, eg in the rotating parts themselves and in the motor driving them. When the motor is switched off, the travelling actuator continues to travel by an amount which is not consistent.

The inconsistency is with time, rotational speed, and distance travelled. The temperature may vary, the thread may be tight in some places and worn or loose at others - becoming more worn with time. So the overshoot is variable and unpredictable with time and position. A long period of operation, or even one long travelling stroke, could mean smoother running and so more excessive overshoots.

(2) According to a second aspect of the present invention, there is a count reference or datum at each extreme of travel of the actuator, beyond each end of the row of "plungers". Let us call these references MIN and MAX (for minimum count eg 0 and maximum count, perhaps $2^{12}$). By the second aspect, every new switching stage would involve referencing the actuator at MIN or MAX before moving it to the desired plunger. Preferably by this aspect, the microprocessor would compute the shorter route by selecting the MIN or MAX reference. There need be only one reference end, but an alternative referencing facility at each end is preferred.

(3) Let us assume, for the third aspect, that plungers 5, 11 and 19 must be actuated in any sequence - according to the third aspect, the counts would be successively set in ascending sequence (No. 5, No. 11 then No. 19), or descending sequence (No. 19, No. 11 then No. 5), never changing direction during the actuation sequence. Moreover, each overshoot is computed, and allowed for, during such a uni-directional sequence. So, the actuator could be referenced at MAX, move to No. 19 (by comparing a set count and a desired count) de-energizing the motor at count equality, overshooting, evaluating the actual overshoot count, and then deducting the latter when setting up the incremental count to move the actuator adjacent "plunger" No. 11. That move too would result in overshoot, which would be computed, then allowed for in setting the next incremental count to move to plunger No. 5. Of course, no overshoot must exceed the longitudinal sum of the cooperating or abutting surfaces of a plunger and the actuator. But the overshoots can never be cumulative thanks to this third aspect of the invention. If the sequence had to be No. 19, No. 5 then No. invention. If the sequence had to be No. 19, No. 5 then No. 11, the count would be referenced to MIN before or after actuation on of No. 5, in order to avoid a change of direction within a sequence. Such changes are only permitted at the ends, ie at MAX or MIN counts. A refinement of the third aspect provides that the microprocessor is programmed long-term to compute the shortest travel for any given uni-directional travelling sequence of switching. So, depending on the start point (which may be always the same, see the fourth aspect below), and if switching order is irrelevant, the ascending or descending possible sequences are evaluated in advance for the lesser of the two total travels (saving time, noise and wear). Referencing at only one end only, would mean that this shortest travel facility would be lost, but the construction and programming would be simpler. However, all sequences must then be carried out in one direction away from the reference end.

(4) According to a fourth aspect of the invention, the computer is arranged always to perform an initialization procedure immediately after a new operation is started-up (ie switching on the commutation arrangement). At starting-up, the travelling actuation will still be at an intermediate station, where the last plunger was actuated before a shutdown. The computer control is arranged always to move the actuator to MIN (or MAX) then towards MAX (or MIN), stopping at every station to actuate all the plungers to initialization states, finally stopping at the last plunger station before MAX or MIN (or the small "overshoot" distance beyond it), and waiting at this last station for a further command.

The initialization is now complete, and the commutator arrangement set, to receive its first command, eg to put on-off switches 3, 15 and 19 on, in a specific sequence for pre-washing or drying etc. If a row of on-off switches is being commutated, the initialization would include actuating or checking all switches at OFF after the actuator has been first referenced at MIN. Of course, initialization could end with the traveller at any other station but the first, or at MIN or MAX, but the first station is presently preferred. All referencing after this switch-on initialization can be at either end, if the facility is provided, as mentioned above.

(5) According to a fifth aspect of the invention, the MIN and MAX reference and reversing points are equipped with end caps which are axially fixed near the ends of the threaded shaft. The end caps are abutted by the travelling actuator to provide axial positional references for the actuator. The stopping of the count is detected, the motor reversed and the MIN or MAX count reference is set in the counter. Every time the traveller reaches the end, the motor will be reversed and the MIN or MAX count set, in response to a static count (or detecting that the motor has stopped). The traveller will be stopped by the end caps, so that the next start position is accurately and predictably known. So the fifth aspect like the previous aspects, increases predictability. The end caps preferably rotate with the shaft, and this rotation is actually made use of in a sixth aspect.

(6) The sixth aspect of the invention also relates to the end caps, and proposes that although the end caps limit axial movement of the traveller, the actual abutment is between generally circumferentially facing surfaces, of the end caps and of the travelling actuator. So the abutted end cap, and the shaft, are actually prevented from turning further by the newly arrived traveller. The end caps must for this aspect be fixed rotationally as well as axially to the shaft. For this and for the preceding aspect, the abutment must take place, and this is sensed, and the counter set, to avoid uncertainty in the starting point position or count for the next stroke of the actuator.

Referring again to the fifth aspect, an abutment and impact between axially facing surfaces can cause the threaded eg nut-type member on which the traveller is mounted, to lock against the threads of the shaft in the manner of locknut operation. This undesirable locking can mean the motor must be very powerful to reverse and then unlock the traveller. The same inertia that causes overshooting, will also increase this undesirable locking. Since the inertia cannot be made negligible in practice, the problem is solved by said sixth aspect. Now the abutment or impact is circumferential in direction, with a negligible axial component.

The sixth aspect requires a circumferential ramp on the end cap of approximately the same inclination as the shaft thread, or other shaping of the end cap, so that no contact can occur on the ramp, only the designed-for abutment between circumferentially facing surfaces. There may be a resilient buffer pad on one surface, or one or both of the actual abutment members themselves may be of resilient plastics etc. The cooperating threads of the shaft and of the traveller, should be so axially located, in relation to the abutting surfaces, to the MAX and MIN digits counted, and to the ramp shape, that reliable referencing of axial position and MAX or MIN count take place. In addition, the axial extent of the actual abutment or impact should be as large as possible, to reduce wear and noise, eg 85-90% of the thread pitch. Just before impact, then, there will be clearance of about a safe 10-15% or so of the thread pitch. Other impacts are to be avoided, by the fifth aspect of the invention.

(7) Instead of the sixth aspect, the seventh aspect may be preferred. Circumferential stopping is more resilient by means of a circular, helical or spiral spring fastened at one end to the threaded shaft, and with an axially spaced radial abutment member forming the other end. Such a spring is very circumferentially yielding, which reduces noise. Moreover, the long period of rotational deceleration of the shaft can be sensed digitally to give advance warning to the motor to stop, which further reduces noise. The seventh aspect thus reduces digital inaccuracies, noise, and wear.

In peferred arrangements, the travelling actuator once stopped at a station, is driven electrically on a pivot by a single electromagnetic coil against spring bias, to operate the local plunger. By the sixth or seventh aspects, during referencing the circumferential impact will cause a reactive rotation about the shaft of the actuator. At one of the ends the impact may be absorbed to some extent or entirely by this spring bias. Then, only at the other of the ends will the impact have to be absorbed by the sixth or seventh aspects to avoid wear and noise. Use of a plunger actuating arms to be received by a soft or resilient fixed pad on the apparatus casing, at the MAX or MIN referencing, after the circumferential faces have impacted or abutted can be useful, but is often found inadequate for noise reduction.

Further features and advantages of the invention will appear from the following description of an embodiment thereof, given by way of example in conjunction with the drawings, in which:-

Figure 1 represents a type of contactor-inverter memory switch device which can be actuated by use of the invention;

Figures 2 and 3 are views from respectively above and behind a programming unit of the invention;

Figure 4 is a vertical section on line IV-IV of Figure 2;

Figures 5 and 6 are vertical sections on line V-V of

- 9 -

0185838

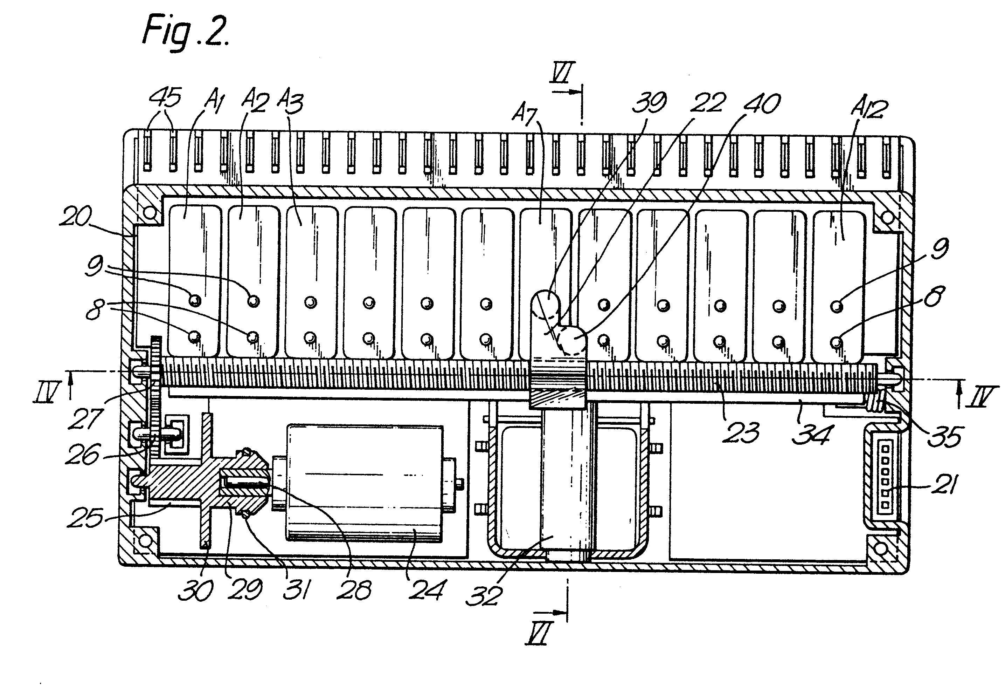

Figure 2, in respectively non-actuating and actuating positions of a pivoted rocker in the programmer;

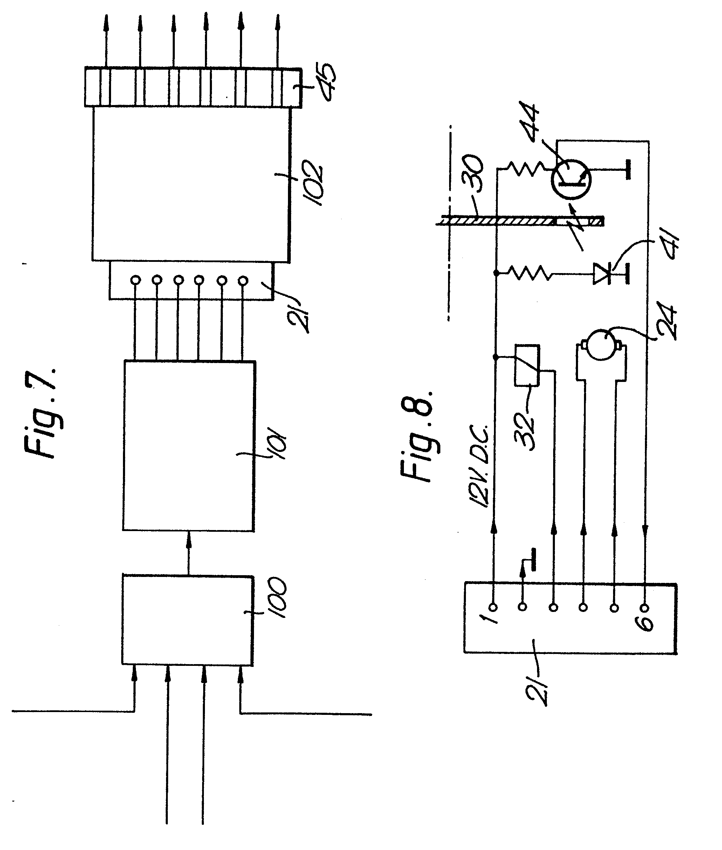

Figure 7 is a circuit illustrating application of the invention to a washing machine;

Figure 8 schematically shows six control connections between a microprocessor and items in the programmer;

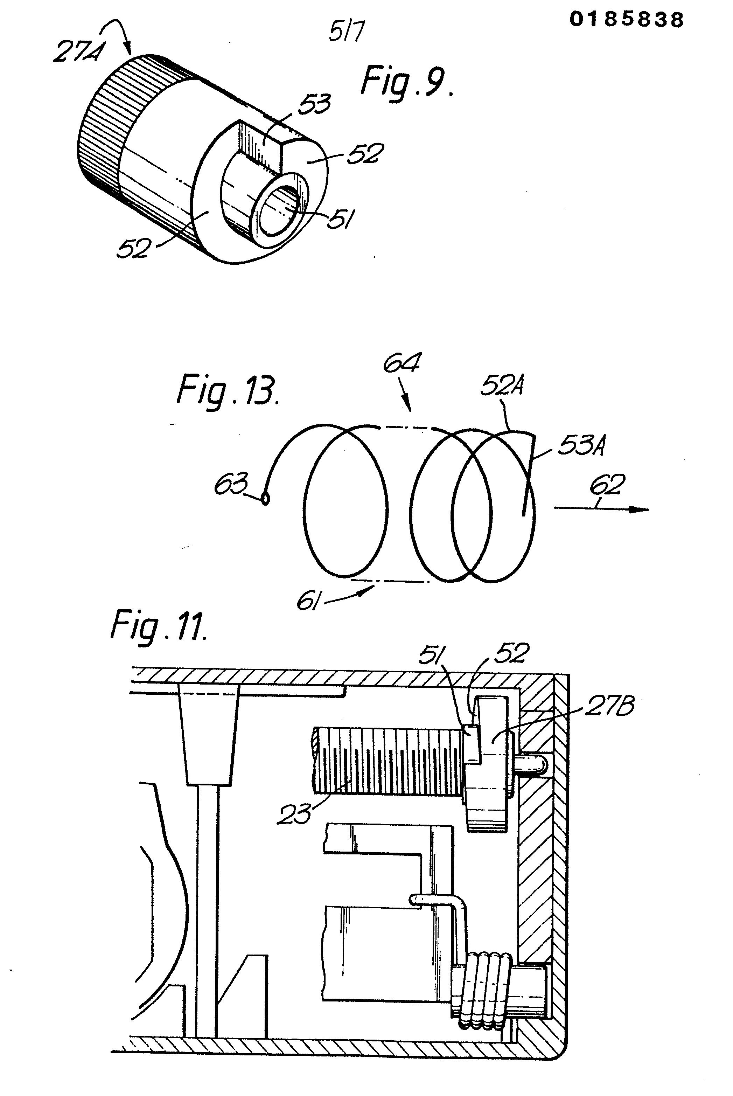

Figure 9 is a perspective view of an improved end cap abutment according to aspects of the present invention;

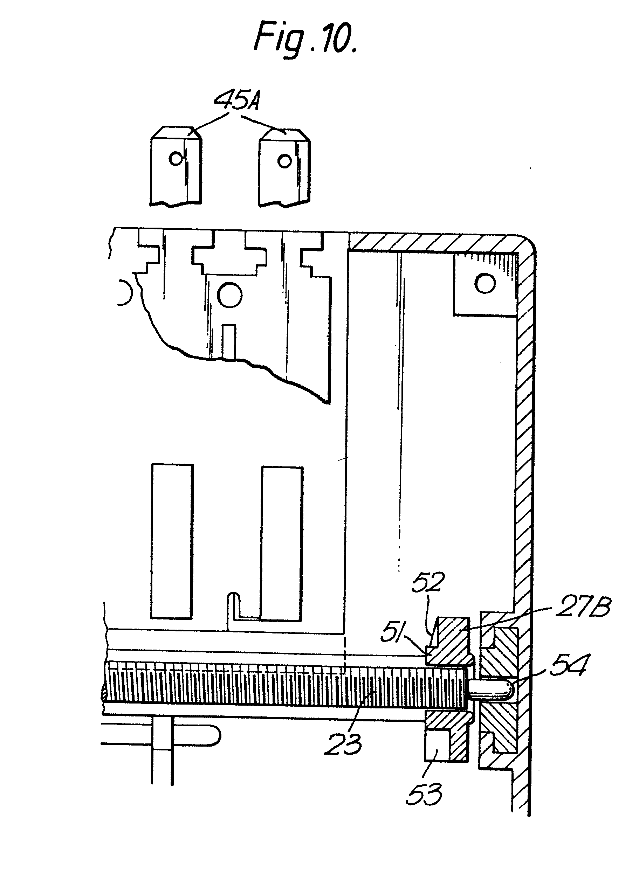

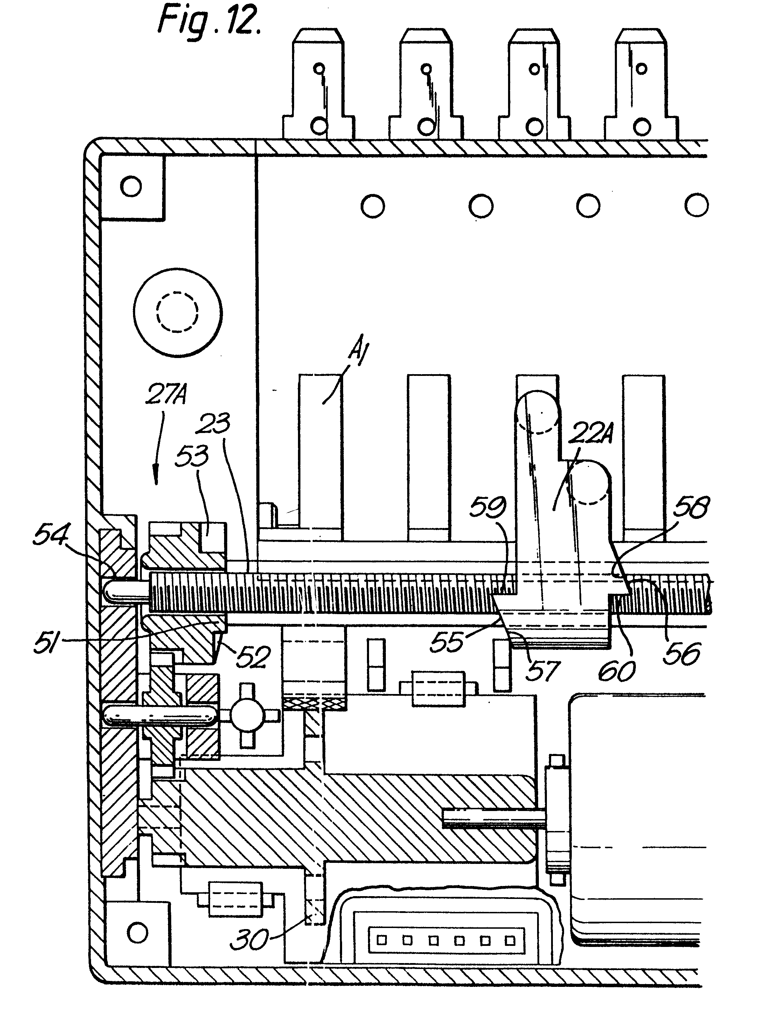

Figures 10 and 11 show side section;

Figure 12 shows in plan a travelling actuator; and

Figure 13 shows schematically a coil spring in perspective - providing an alternative end abutment to Figure 9, giving resilient, relatively noiseless abutment.

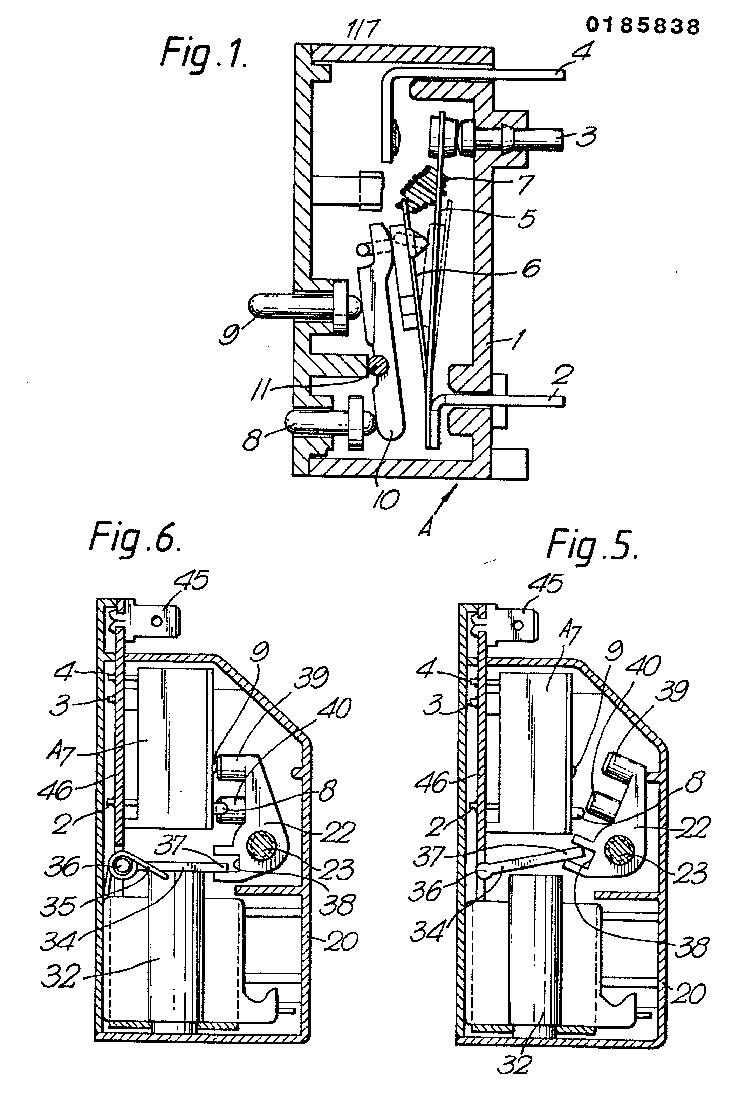

Referring to Figure 1, the contactor-inverter can be of known design for switching 220 volts, for instance, comprising a casing 1 housing three terminals 2, 3 and 4, terminal 2 being connected to 220 volts live terminal 3; or neutral, zero or earth terminal 4; depending on the position of a snap-action blade 5. The blade is snapped by a tumbler 6 rocked under the action of a compression spring 7. Tumbler 6 can be a tongue cut out from the central part of the blade 5. This is one of many known memory switch actions whereby the switch stays in one condition until next actuated to another.

These two conditions are attained by pressing one or other of two plungers 8 and 9 acting on tumbler 6 through a see-saw beam 10 freely pivoted about an axis 11 fixed in casing 1; the pivoting being in one direction when plunger 8 is depressed and in the other direction by depression of plunger 9.

Thus whichever of plunger 8 or plunger 9 is depressed causes respectively circuit 2-5-3 or 2-5-4 to be completed.

Figures 2, 3 and 4 show a bank or row of 12 two-way switches $A_1$, $A_2$ .... $A_{12}$ such as that of Figure 1 together in a single casing 20 controlled by outputs from a microprocessor not shown, eg via a junction plug 21 as explained hereinafter (see also Figure 8).

A preferred multiple memory switch actuator of the inventive commutator, for switches $A_1 - A_{12}$, comprises a single rocker 22 pivotally mounted to travel along a rotatable threaded bolt 23 driven by a motor 24 through gearing comprising a pinion 25, a first idler gearwheel 26 and a second toothed wheel 27 fixed to the rotating bolt or screw 23. The output shaft 28 of motor 24 drives a further shaft 29 carrying a pinion 30 whose role involving a limited friction clutch 31 will be explained below.

An electromagnet 32 when energized via leads 33 attracts a pivoted armature 34 (Figure 6) against a return spring 35. The armature 34 is formed as a long plate longitudinally pivoted about an axle 36 which is also parallel to the threaded bolt or screw 23.

The distal longitudinal edge 37 of armature plate 34 is in constant engagement in a longitudinal notch or groove 38 in the lower face of rocker 22 so that according to whether the electromagnet 32 is energized or not, armature 34 is attracted downwards (Figure 6), or relaxes upwards (see Figure 5) under the action of return spring 35, and the rocker 22 is rotated anticlockwise as in Figure 6 towards all the plungers 8 and 9, or clockwise as viewed in Figure 5 away from the row of switch plungers. This actuating action will occur no matter what position the rocker 22 happens to be occupying along the row of switches.

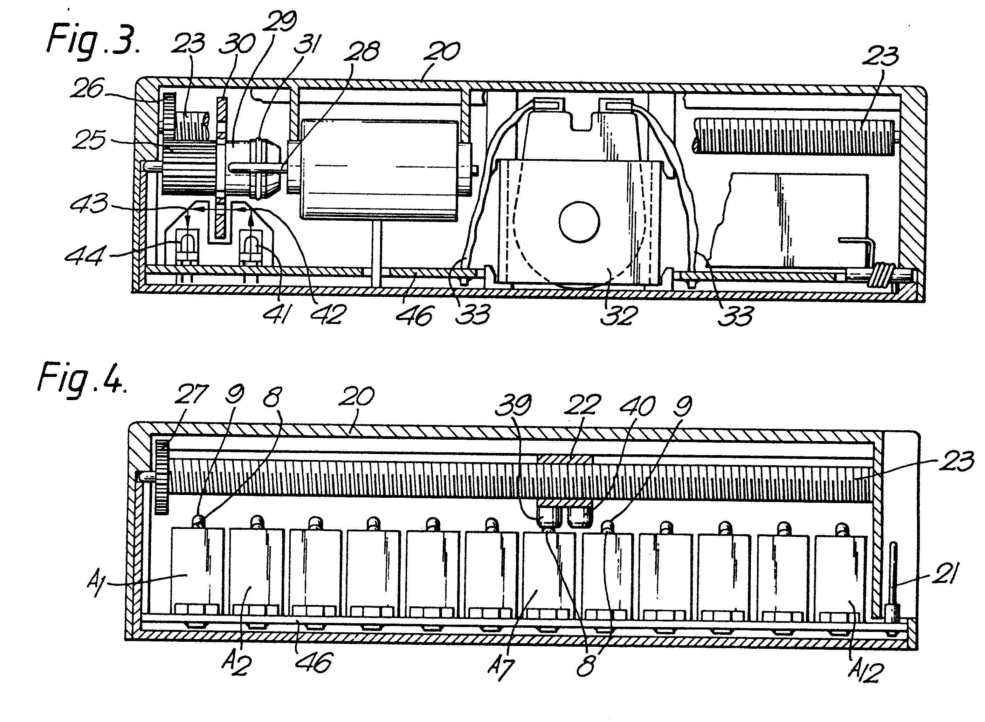

Rocker 22 has two abutments 39, 40 for pushing one plunger 8 or one plunger 9 at a time. Either the plungers 8 and 9 of any one switch eg $A_7$ can occupy different longitudinal positions along the row (not as shown), or the two abutments 39 and 40 of the common rocker can be spaced longitudinally as seen in Figures 2 or 4, or of course both can be spaced.

So, according to the position along screw 23 of rocker 22, one of the plungers 8 or 9 is pressed by an abutment when the common electromagnet 32 is energized. As our switches are arranged in Figure 1, one switch A has either circuit 2-5-3 or 2-5-4 closed. Which particular plunger 8 or 9 is pressed, and of which particular switch A, will depend on the total or incremental count of the turns of screw 23. This count can be registered, see Figure 3, by the obscuring of a light ray which has been emitted by light emitting diode (LED) 41 and reflected internally by a first prism 42, from which it passes conditionally through one of several perforations arranged around a disc 30, and is reflected from a second prism 43 to strike a phototransistor 44. The collector voltage of phototransistor 44 will be low when a perforation is in the light beam path, and high when no perforation lies in the light path. The lows or highs are counted and compared with a set count corresponding to a desired switch actuating station, in order to select which plunger 8 or 9 should be depressed next by reference to its position. Other photodetecting arrangements arrangements can be used to count rotations.

Terminals 2-3-4 of the 12 switches A are connected to outputs 45, Figure 2 by means of a circuit printed on the base 46 (Figure 3) of housing 20, which circuit may likewise comprise the connections between the motor 24, the electromagnet 32, the phototransistor 44 and the connection plug 21.

The operation of the above is that a program selected on the microprocessor "informs" the motor (by setting and comparing counts) how many turns to rotate screw 23 to bring the abutment 39 or 40 of the rocker 22 to a stop opposite a desired one of the 24 plungers, and then energizes the coil to attract the armature, hence to command the rocker to pivot and thus to depress that one plunger. Then that plunger may be released sooner or later, the motor is commanded to execute more turns backward or forward, and another plunger 8 or 9 is likewise pressed in. Each plunger 8 or 9 retains its position until and if the other plunger of that switch is depressed at some later stage in the program. Often, a program stage will involve switching an energized switch A off before energizing one or more other switches A, until finally all the stages of a given program have been executed following successive commands of the microprocessor.

The circuit of Figure 7 illustrates this embodiment in practice programming a washing machine, and has a node or junction box 100 to unite all the four input parameters that are typically necessary namely:

(1) the selection of a suitable program, according to the nature of the articles to be washed

(2) the fluid level within the washing chamber

(3) the temperature in the chamber

(4) the condition of the door (open or shut).

These four inputs are passed to a microprocessor shown schematically at 101, from which six leads pass to the terminal plug 21 (see also particularly Figures 2, 4 and 8) of the apparatus of the previous Figures (shown in Figure 7 as a "black box" 102). The six leads on plug 21 consist (as seen in Figure 8) of:-

(1) the dc supply (12v) to the LED and the phototransistor 44; and if desired to one terminal of magnet 32 as illustrated;

(2) supplies earth potential to earthing points of commutation unit;

(3) energization of electromagnet 32;

(4) and (5) energization of motor 24 (two leads);

(6) output of the light sensor, ie collector of the phototransistor 44 supplied to the microprocessor. The first five are thus microprocessor outputs, the sixth an input.

The commutated signals exit via terminals 45 (Figures 7 and 2) in order to realize twelve controls or functions, eg relays, filling or emptying pump, cycling eg dish-spraying or rinsing pump, water softener pump, water valve on-off, distribution of liquids and powders.

In prior art arrangements, the same result required twelve relays working independently, which would likewise have been commanded eg by microprocessor 101, with correspondingly complex wiring, whereas the commutator embodying the invention and described above can permit as few as four useful command wires to cater for the same functions.

The above is only an example, permitting many obvious electrical or mechanical equivalent variants. Thus inverters A could be replaced in part or entirely by single contactors (eg with single plungers). They could be located at irregular intervals instead of with uniform spacings as Figure 2 illustrates (so that the successive count increments would be different correspondingly); they could be twinned, eg with tie-bars; all or some of the switches A could be wired to give a visual indication of its condition, or collective indications of the progress of the program, etc. The contacts 45 and other connections may be in the housing 20. Parts 8, 9, 10 may be integrated, ie the two plungers 8 and 9 can be abutments projecting from a single pivoting or rotating part which also incorporates the see-saw beam 10.

Referring to Figure 2 again, travelling actuator rocker mechanism 22 has alternative abutments 39 and 40, one of which confronts an on-plunger 8 or off-plunger of on-off switches 9 at each possible stopping-station as shown. Rocker 22 travels on a nut member threaded by a rotating threaded shaft 23 which is fixed axially. The shaft is , driven by a motor which also rotates a perforated disc 30. Perforations unmasking a light path are counted, registration of the count in a microprocessor giving the actual position and station of the traveller rocker 22. Each station is represented by a different desired count. Zero count or MIN is set when the traveller is brought to the extreme left, abutting flat end cap 27 which can rotate with the shaft, but is axially fixed. The sensed abutting is also used to change the direction of motor drive, the travelling now is to the right. Unfortunately the abutment between the axially facing flat surface of cap 27 and the traveller can cause the threaded members to lock together, so the "fifth aspect" is embodied by eg the arrangement of Figures 9-12. End cap 27A is rigidly attached by its boss 51 to the shaft 23 not shown, but extending to the right and has a helically ramped end face 52 surrounding central boss 51. The ramped surface is approximately parallel to the thread of shaft 23, and provides a step at some point around the circumference, which provides an abutment surface 53 facing circumferentially. The axial extent of the surface will of course approximately or exactly equal the pitch of the thread.

End cap 27A rotates with the shaft 23 see Figure 2, and it is arranged that as the traveller moves leftward, the only impact with rotating end cap 27A is with abutment surface 53, just after the count has stopped. On the penultimate rotation of the end cap, the traveller will be close to the end cap but keep 10-15% of a thread pitch away from it, by virtue of the ramped profile of face 52. End cap 27A may in order to reduce noise, shock and wear, be of resilient plastics or other impact-absorbing material, or may carry a resilient pad, not shown. This abutment on circumferentially facing surface 53 prevents locking of the threads. Little electrical energy is therefore required in the motor to reverse direction after impact at referencing. At the other right hand end of the shaft 23 is a similar end cap 27B shown in Figure 11. This is used for referencing position at MAX count, according to the first aspect of the invention.

The single end cap 27 of Figure 2 is now replaced by the two end caps 27A and 27B, giving alternative position references to set the MAX and MIN counts, therefore. Figures 11 and 12 show the ramp 52, abutment surface 53 and boss 51 of the MAX end cap 27B, also the last two on-off switches A11, A 12, and faston connectors 45A terminating the switches, being well-known alternatives to sliding contacts 45 of Figure 2. The shaft and end cap may rotate in plain bearing 54. Figure 12 shows in side view the perforated wheel 30, the shaft 23, and, at the left hand "MIN" end, end cap 27A.

Also in Figure 12 can be seen the traveller 22A, which, by the fourth aspect of the invention, differs from the "basic" traveller 22 of Figure 2 in having axially or left- and right-facing claws 55 and 56 which have ramp surfaces 57 and 58 and abutment surfaces 59 and 60. These abutment surfaces will abut surfaces 53 of end caps 27A, 27B at each end of shaft 23. The axial relationship between the threading of the shaft and of the cooperating nut which carries the traveller, and the ramps 52, 57, 58 and the abutment surfaces 53, 59, 60 should be chosen to give (as mentioned above) about 90% of a thread spacing for the axial lengths of the final area of abutments at rest at either end. Therefore the penultimate turns of the thread will cause the ramp 55 or 56 to be spaced by 10% of a thread pitch from the end cap ramp 52. The designer can arrange for more or less than 10% according to whether a larger margin of safety for wear etc, or a slightly larger abutment area, eg 95% of a pitch, is felt the more desirable.

The microprocessor or computer has to remember in register at all times after switch-on, where the traveller is and which plungers are actuated. The initialization procedure described under the "fourth aspect" avoids requirement to remember between switch-ons. Since the, plungers comprise on and off plungers of memory switches, in practice there is only need to memorize the current condition of each switch. The computer also has to compute often the shorter distance and hence the less noisy of two alternatives when referencing at either end is possible. The invention of course envisages that referencing always at one end may often be preferred, thus saving this computation and the requirement for more than one end cap (with its ramp and circumferentially facing abutment surface), and for more than one ramp and abutment on the traveller. The preferred two- end referencing saves a lot of travelling, noise, wear and time, however;  eg when many complicated sequences are to be carried out.

All abutments should be resilient or padded to minimize noise and bounce, including end abutments (unless at one end, recoil is sufficiently absorbed by the pivoted biassing of the actuator);  the travelling actuator should be referenced in position and count every time it changes direction if both ends are reference points;  or if referencing is only available at only one end, successive travel movements must be in only one direction away from that end without a further referencing;  any change in direction must be preceded by a referencing;  in case of both ends being used for referencing, the computer is programmed to compute the shortest combination path for referencing and following a sequence;  one or both end caps preferably have circumferential abutments and slopes or ramps, which cooperate with one or two ramps and with transverse-facing abutments on the travelling actuator, the ramps avoiding axial abutment while providing maximum circumferential abutment area ie following the pitch of the thread;  only one set of such abutments being needed if only one end is used for referencing.

Referring now to Figure 13, a coil spring is shown schematically at 61 with its helical axis parallel to the direction of movement, shown as arrow 62, of the traveller 22.  In fact the coil spring encircles the threaded shaft 23, not shown, and one end 63 is anchored to the shaft so that the coil rotates with it.  The spring 61 may comprise several loose turns as schematically shown, broken at 64, or the turns may be dense and strong, somewhat as on a clothes peg. We find three loose turns quite satisfactory.  End 63 is the only fixing point, the turns being free to compress or wind up, whenever the traveller 22 abuts the free end of the spring, to the right as viewed in Figure 13.  The final turn 52A fulfils the task of the ramp 52 in Figure 9, since the traveller abutment 59 or 60 will clear this turn, finally-abutting, in a circumferential manner, the radially directed abutment portion 53A of the spring. The traveller can be exactly or essentiially as shown in Figures 10-12, with abutments 59 and 60.

The radial abutment 53A may be shaped, eg by flattening etc. Since its end 65 is free to deflect axially or circumferentially and the spring can compress or wind-up on impacts, more or less according to its spring-factor, the impact causes very little noise, and the shaft 23 can rotate for some time before the spring is wound up sufficiently to stop the travelling actuator 22.

There is preferably a spring 64 at each end of the shaft. When the abutment surfaces 59 or 60 of rocker 22 abut the end 53A of either spring, the slowing down of the shaft and rocker is gradual enough to enable the slowing of the optically sensed pulse count to be detected. The microprocessor finds the pulse period exceeds a threshold and switches off the motor, before the speed reaches zero rpm. The noise and energy of the shock are reduced, and the stopping position is more predictable for each initialization.

Also on the subject of minimizing noise, some experiments have suggested that the use of the intermediate pinion 26 free on its own shaft is not the quietest form of gearing. Coupling the drive pinion 25 on the motor shaft to the threaded shaft pinion 27 by a toothed belt (with redesign of the pinion shapes to conform with the teeth of the belt) can reduce noise substantially, while maintaining 3000 rpm and the transmission ratio of 1/1,5.

- 18 -

0185838

<u>CLAIMS:-</u>

1.      Commutator arrangement comprising; switch control elements (8, 9), operable selectively in sequences by relay and actuator action characterized in that, common to a row of said switch control elements (8, 9) are a single positionally fixed relay transducer unit (32-35) having an extendedly active driving portion (37), and a single traveller actuator (22) capable of travel selectively along said row, said actuator having a driven portion (38) able, whatever its selected position of travel at any moment, to be engaged by said extendedly active driving portion (37) under control of said transducer unit (32-35); said actuator (22) on said engagement assuming first an actuation state and then a relaxation state; the switch control elements being such that an actuated element (8 or 9) remains actuated after the relaxation of the travelling actuator (22).

2.      Commutator arrangement according to claim 1 characterized in that the switches have memory snap-actions, and each have set or on-plungers (8) and reset or off-plungers (9) at different positions in the row, said actuator being selectively positionable adjacent one of said plungers, off or on, of one of said switches ($A_1$-$A_{12}$).

3.      Commutator arrangement according to claim 1 or claim 2 characterized in that the transducer unit includes an electromagnet (32) attracting a pivoted armature (34) against a return spring (35), said extendedly active driving portion (37) being a distal long edge of the pivoted armature which has extended length in the dimension of the actuator travel, said actuator (22) having a notch or groove (38) continually engageable by said long edge driving portion (37) whichever switch plunger (8 ro 9) happens to be adjacent.

4.     Commutator arrangement according to claims 1, 2 or 3 characterized in that the actuator travels on a longitudinal support (23) by rotations of a member which is driven under digital control, and in that, in order to reduce possible inaccuracies of incremental positioning, a referencing device for the digital control comprises abutting surfaces (53, 53A, 59, 60) at one or both ends of travel, and referencing by such device is arranged to be regularly carried out during sequences involving multiple actuations of switch control elements (eg before each change in direction of travel).

5.     Commutator arrangement according to claim 4 characterized in that the support and the rotating member is provided by the same shaft (23) which cooperates by nut-and-bolt action with a transporter portion of the travelling actuator (22).

6.     Commutator arrangement according to claim 5 characterized in that the shaft is rotated by a motor (24) which is started and stopped by a digital rotation sensor (30, 44) in cooperation with components external to the motor which include a counter and a commander in a sequence storage and retrieval input/output;  eg a device microprocessor (101) with stored digital programmes.

7.     Commutator arrangement according to claim 5 or 6 characterized in that referencing involves abutments between circumferentially facing surfaces (eg surfaces parallel to the support).

8.     A programmer according to claim 7 characterized in that an abutment (53A) carried by and rotating with the shaft comprises a radial extension from one axial end of a coil spring (61) which is wound over the support and has only its other end (63) secured to the shaft (23).

0185838

9. Commutator arrangement according to claim 5 characterized in that the motor is of the stepping or other digitally responsive type.

10. Commutator arrangement according to any of claims 1 to 9 characterized in that the control elements are set (ON) and reset (OFF) controls of memory switches ($A_1$-$A_{12}$), each of which controls a domestic machine function (eg heat, tumble, spin), under command of a multiple programme digital storage device (microprocessor 101)

Fig.1.

0185838

Fig.6.

Fig.5.

Fig.2.

0185838

0185838

Fig.3.

Fig.4.

Fig.7.

Fig.8.

0185838

**Fig.9.**

53

52

51

52

27A

**Fig.13.**

64

52A

53A

63

62

61

**Fig.11.**

51 52

27B

23

## Fig.10.

Fig.12.